(19) Europäisches Patentamt European Patent Office Office européen des brevets

(11) **EP 3 206 172 A1**

(12) **EUROPEAN PATENT APPLICATION**

(43) Date of publication:
16.08.2017 Bulletin 2017/33

(51) Int Cl.:
*G06Q 10/06* (2012.01)  *G06Q 50/06* (2012.01)
*H04L 12/28* (2006.01)

(21) Application number: 16162537.1

(22) Date of filing: 29.03.2016

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 15.02.2016 IN 5245MU2016

(71) Applicant: Wipro Limited
560 035 Karnataka (IN)

(72) Inventors:
• BANERJEE, Joy
713216 West Bengal (IN)
• KAIMALILPUTHENPURA, Baburaj
673579 Kerala (IN)
• DHILLON, Har Amrit Pal Singh
122009 GURGAON (IN)
• SINGH, Parminder
122001 Haryana (IN)

(74) Representative: Finnegan Europe LLP
16 Old Bailey
London EC4M 7EG (GB)

(54) **A METHOD FOR DETERMINING PERFORMANCE OF AN INTERMITTENTLY USED REFRIGERATOR USING A PERFORMANCE MEASURING DEVICE**

(57) The present disclosure relates to method and device for determining performance of an intermittently used refrigerator. Performance measuring device receives time stamped temperature data from temperature sensor configured in the intermittently used refrigerator. The received time stamped temperature data is used to determine values for each of one or more predefined parameters associated with the intermittently used refrigerator. The performance measuring device determines temperature variation of the intermittently used refrigerator at predefined time intervals. Based on the determined temperature variation, additional service windows in a site comprising the intermittently used refrigerator are identified i.e. the intensity of sales in the site are identified. The determined values of each of the one or more predefined parameters and the determined temperature variation, helps in determining the performance of intermittently used refrigerator. One or more suggestions related to performance of the intermittently used refrigerator and energy consumption are provided to an end user.

Fig.1a

## Description

## Technical Field

The present subject matter relates generally, but not exclusively, to a method and device for determining performance of a refrigerator, particularly an intermittently used refrigerator.

## Background

Generally, refrigerators such as under-counter chillers are used to store all sorts of food and beverage items. The food and beverage items must be stored within certain temperature ranges, otherwise the food and beverages might get spoilt. Refrigerators are a key asset and play a major role in Quick Service Restaurants. As an example, some of the typical refrigerators are Make lines, Walk in coolers, Walk in Freezers, under Counter Chillers etc. These refrigerators mainly fall in two categories, continuously used refrigerators and intermittently used refrigerators. Continuously used refrigerators are the refrigerators that operate continuously every day. Intermittently used refrigerators are the refrigerators that are operated during only certain times of the day.

Refrigeration contributes around 10-20% of the energy usage of a site that comprises the refrigerators, as these assets have high hours of usage. The performance of the refrigerators may adversely impact on such energy usage for the site. Poor performance of failure of the refrigerators may lead to throwing away food and beverages where temperature critical limits have been breached. Therefore, there is a need to monitor the refrigerators regularly.

There exist are some controllers which can be mounted onto refrigerators to generate data for monitoring the refrigerator. However, the existing controllers do not provide complete details about the performance of the refrigerator for analysis purposes.

## Summary

One or more shortcomings of the prior art are overcome and additional advantages are provided through the present disclosure. Additional features and advantages are realized through the techniques of the present disclosure. Other embodiments and aspects of the disclosure are described in detail herein and are considered a part of the claimed disclosure.

The present disclosure aims to provide a method and a device for managing the energy as well as operational performance of intermittently used refrigerators. The method and device can provide an inexpensive and easily-installed alternative to Internet of Things (IoT) ready refrigerators.

Disclosed herein are a method and a device for determining performance of an intermittently used refrigerator. A performance measuring device receives time stamped temperature data from temperature sensor associated with the intermittently used refrigerator. The performance measuring device determines values for each of the one or more predefined parameters and temperature variation, based on the time stamped temperature data. The present disclosure uses only the time stamped temperature data to determine the values for each of the one or more predefined parameters and the temperature variation. Temperature variation not only helps in determining performance of the intermittently used refrigerator but also helps in understanding the business intensity of a site comprising the intermittently used refrigerators. Temperature variation is directly proportional to number of times door of the intermittently used refrigerator is opened and closed. Therefore high temperature variation indicates high business intensity leading to additional service windows. So, when the temperature variation is less, it means that the business intensity is low leading to less number of additional service windows. During the time frame of such low business intensity, the method provides one or more suggestions to perform energy consumption.

Accordingly, the present disclosure comprises a method for determining performance of an intermittently used refrigerator. The method comprises receiving by a performance measuring device, time stamped temperature data corresponding to the intermittently used refrigerator. Thereafter, the performance measuring device determines values for each of one or more predefined parameters associated with the intermittently used refrigerator based on the time stamped temperature data. The one or more predefined parameters are fire up time, response time, settling temperature, food storage compliance temperature and temperature settling time. Further, the performance measuring device determines temperature variation of the intermittently used refrigerator based on the time stamped temperature data to identify additional service windows in a site comprising the intermittently used refrigerator. Finally, the performance measuring device determines the performance of the intermittently used refrigerator by analysing the temperature variation and the determined values of each of the one or more predefined parameters.

Further, the presence disclosure relates to a method for determining performance of an intermittently used refrigerator, the method comprising: receiving, by a performance measuring device, time stamped temperature data corresponding to the intermittently used refrigerator; determining, by the performance measuring device, values for each of one or more predefined parameters associated with the intermittently used refrigerator based on the time stamped temperature data, wherein the one or more predefined parameters are fire up time, response time, settling temperature, food storage compliance temperature and temperature settling time; determining, by the performance measuring device, temperature variation of the intermittently used refrigerator based on the time stamped temperature data to identify additional service windows in a site comprising the intermittently used refrigerator; and determining, by the performance measuring device, the performance of the intermittently used refrigerator by analysing the temperature variation and the determined values of each of the one or more predefined parameters.

In an embodiment, the method further comprises: determining, by the performance measuring device, deviation of the determined values of each of the one or more predefined parameters from one or more predetermined values, wherein the one or more predetermined values are stored in a database associated with the performance measuring device; and notifying, by the performance measuring device, the deviation to an end user of the intermittently used refrigerator.

In an embodiment, the method further comprises identifying, by the performance measuring device, time interval when the additional service windows are low in the site to reduce energy consumption of the intermittently used refrigerator during the identified time interval.

In an embodiment, the method further comprises providing, by the performance measuring device, one or more suggestions related to the performance and the energy consumption of the intermittently used refrigerator to the end user.

Further, the present disclosure comprises a performance measuring device for determining performance of an intermittently used refrigerator. The performance measuring device comprises a processor and a memory communicatively coupled to the processor. The memory stores the processor-executable instructions, which, on execution, causes the processor to receive time stamped temperature data corresponding to the intermittently used refrigerator. Upon receiving the time stamped temperature data, the processor determines values for each of one or more predefined parameters associated with the intermittently used refrigerator based on the time stamped temperature data. The one or more predefined parameters are fire up time, response time, settling temperature, food storage compliance temperature and temperature settling time. Further, the processor determines temperature variation of the intermittently used refrigerator based on the time stamped temperature data to identify additional service windows in a site comprising the intermittently used refrigerator. Finally, the processor determines the performance of the intermittently used refrigerator by analyzing the temperature variation and the determined values of each of the one or more predefined parameters.

Further the present disclosure relates to a non-transitory computer readable medium including instructions stored thereon that when processed by at least one processor causes a performance measuring device to perform operations comprising receiving time stamped temperature data corresponding to the intermittently used refrigerator. The instructions further cause the processor to determine values for each of one or more predefined parameters associated with the intermittently used refrigerator based on the time stamped temperature data. The one or more predefined parameters are fire up time, response time, settling temperature, food storage compliance temperature and temperature settling time. Thereafter, the instructions cause the processor to determine temperature variation of the intermittently used refrigerator based on the time stamped temperature data to identify additional service windows in a site comprising the intermittently used refrigerator. Finally, the instructions cause the processor to determine the performance of the intermittently used refrigerator by analysing the temperature variation and the determined values of each of the one or more predefined parameters.

The foregoing summary is illustrative only and is not intended to be in any way limiting. In addition to the illustrative aspects, embodiments, and features described above, further aspects, embodiments, and features will become apparent by reference to the drawings and the following detailed description.

## Brief Description of the Accompanying Diagrams

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Fig.1a shows an exemplary architecture for determining performance of an intermittently used refrigerator in accordance with some embodiments of the present disclosure;

Figs.1b-Fig.1d illustrates flowcharts to show how the values for each of the one or more predefined parameters are determined in accordance with some embodiments of the present disclosure;

**Fig.1e** illustrates flowchart to show how to determine temperature variation in accordance with some embodiments of the present disclosure;

**Fig.2** shows a detailed block diagram of a performance measuring device for determining performance of an intermittently used refrigerator in accordance with some embodiments of the present disclosure;

**Fig.3** illustrates a flowchart for determining performance of an intermittently used refrigerator in accordance with some embodiments of the present disclosure; and

**Fig.4** is a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

## Detailed Description

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure relates to a method and a device for determining performance of an intermittently used refrigerator. A performance measuring device receives time stamped temperature data from temperature sensor configured in the intermittently used refrigerator. The received time stamped temperature data is used to determine the values for each of one or more predefined parameters associated with the intermittently used refrigerator. Upon determining the values for each of the one or more predefined parameters, the determined values are compared with one or more predetermined values stored in a database associated with the performance measuring device. The deviation of the determined values from the one or more predetermined values is determined based on the comparison. If any deviation is observed, the deviation is notified to an end user. Further, the performance measuring device determines temperature variation of the intermittently used refrigerator at predefined time intervals. Based on the determined temperature variation, additional service windows in a site comprising the intermittently used refrigerator are identified i.e. the intensity of sales in the site are identified. Finally, the determined values of each of the one or more predefined parameters and the determined temperature variation, helps in determining the performance of the intermittently used refrigerator. One or more suggestions related to the performance of the intermittently used refrigerator and energy consumption are provided to the end user.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

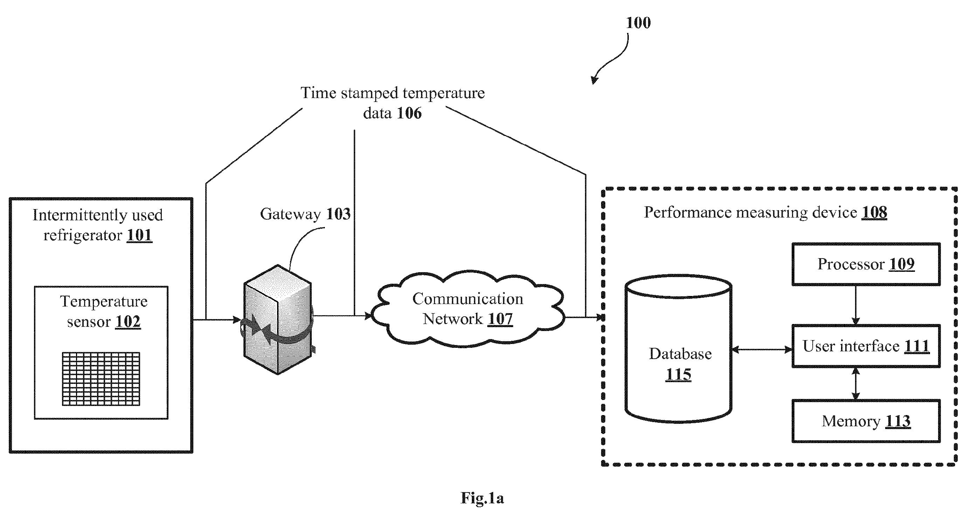

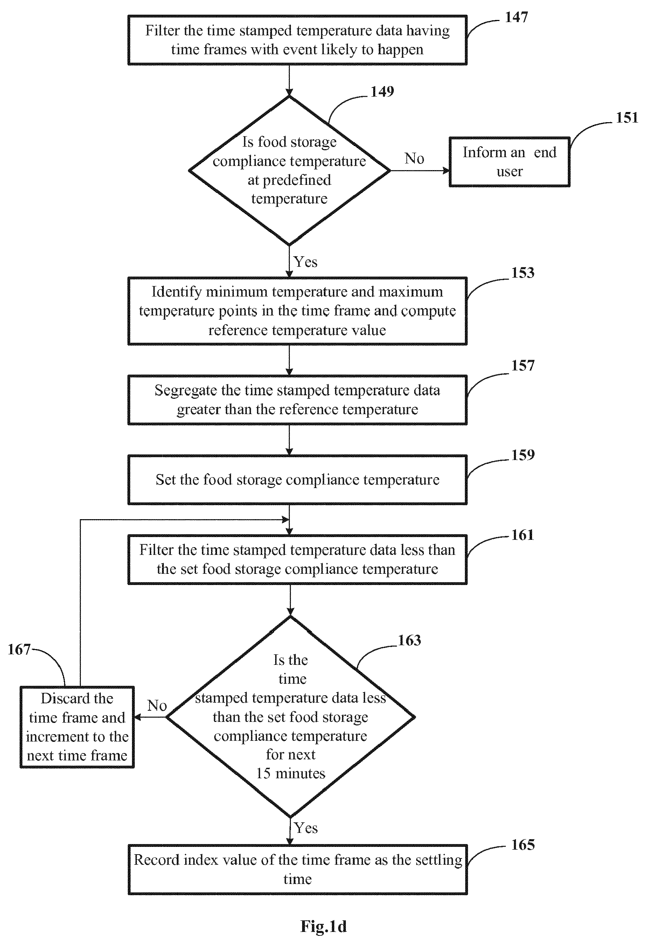

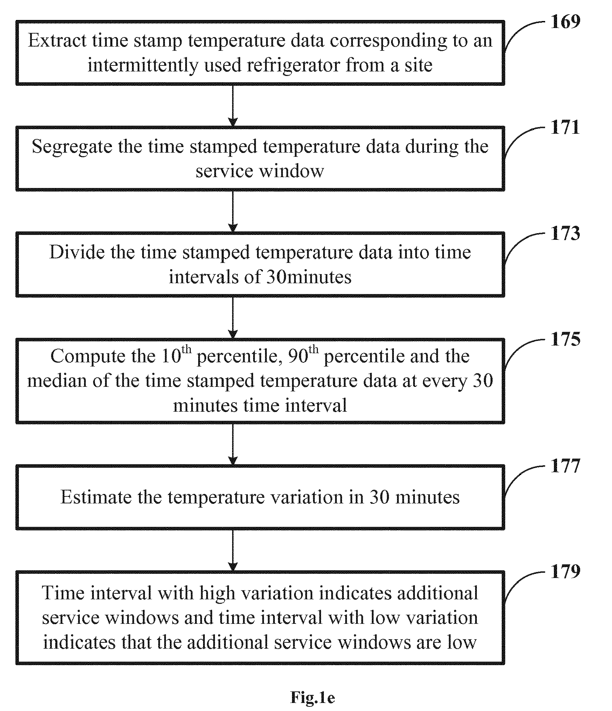

**Fig.1a** shows an exemplary architecture for determining performance of an intermittently used refrigerator in accordance with some embodiments of the present disclosure.

The architecture **100** comprises an intermittently used refrigerator **101**, a temperature sensor **102,** a gateway **103,** a communication network **107** and a performance measuring device **108.** As an example, the temperature sensor **102** may be air temperature sensor. The communication network **107** maybe at least one of wired communication network and wireless communication network.

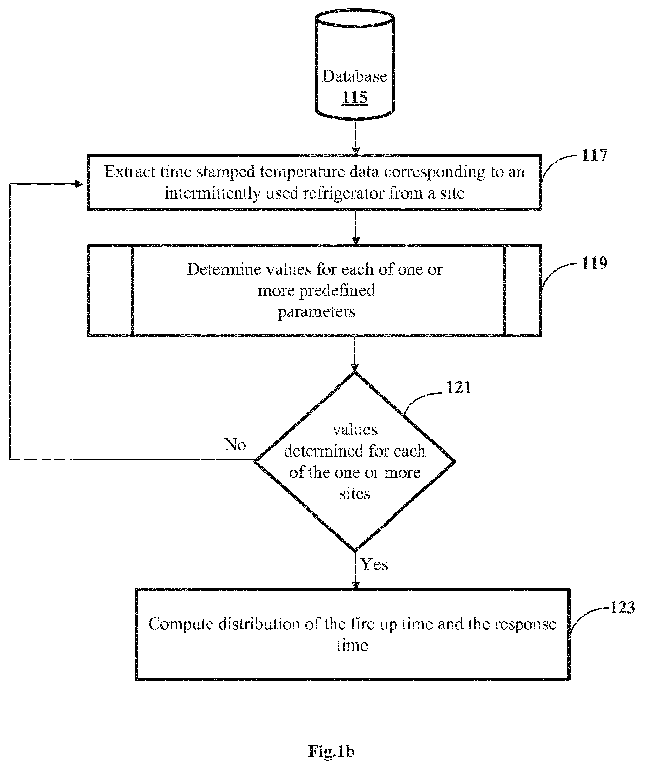

The intermittently used refrigerator **101** may be present in a site. As an example, the site may be a restaurant, a food storage area etc. The site may comprise one or more intermittently used refrigerators **101.** In an embodiment, there may be one or more sites comprising one or more intermittently used refrigerators **101.** For the purpose of illustration, the present disclosure is described considering that a site comprises only one intermittently used refrigerator **101.** The temperature sensor **102** is configured in the intermittently used refrigerator **101.** The temperature sensor **102** is configured to detect or record temperature of the intermittently used refrigerator **101** at predefined time intervals, referred to as time stamped temperature data **106,** from each of the one or more sites i.e. the temperature data is collected at the given predefined time interval from each of the one or more sites. The intermittently used refrigerator **101** is connected to the gateway **103.** The gateway **103** comprises a first interface and a second interface. The first interface collects time stamped temperature data **106** from the intermittently used refrigerator **101.** Upon collecting the time stamped temperature data **106,** the second interface transmits the time stamped temperature data **106** through the communication network **107** to the performance measuring device **108.** The performance measuring device **108** comprises a processor **109,** a user interface **111** and a memory **113** and a database **115.** The processor **109** translates the received time stamped temperature data **106** to a readable format and stores the readable format of received time stamped temperature data **106** in the database **115.** In an embodiment, the database **115** may be configured in the performance measuring device **108** or the database **115** may be standalone which is associated with the performance measuring device **108.** The processor **109** determines values for each of one or more predefined parameters associated with the intermittently used refrigerator **101** based on the time stamped temperature data **106.** The one or more predefined parameters are stored in the memory **113.** The one or more predefined parameters may be fire up time, response time, settling temperature, food storage compliance temperature and temperature settling time. Fire up time is the time taken by the intermittently used refrigerator **101** to start the process of cooling. Initially when the intermittently used refrigerator **101** is started, internal temperature of the intermittently used refrigerator **101** is same as external temperature. Gradually, the internal temperature of the intermittently used refrigerator **101** reduces and the internal temperature reaches the desired temperature. Therefore, the time taken by the intermittently used refrigerator **101** to reach the desired temperature to start the process of cooling is known as the fire up time. Response time is the time taken by intermittently used refrigerator **101** to cool down temperature of the materials stored inside from their initial temperature to the desired temperature. As an example, the materials stored inside the intermittently used refrigerator **101** may be meat, vegetables, fruits, dishes, beverages etc. The desired temperature at which the materials inside the intermittently used refrigerator **101** may be stored is known as the food storage compliance temperature. Temperature settling time is the time taken by the intermittently used refrigerator **101** to settle at the settling temperature. The entire process of determining values for each of the one or more predefined parameters is illustrated in **Fig.1b.**

At block **117,** time stamped temperature data **106** is extracted from the database **115.** In an embodiment, the readable format of the received time stamped temperature data **106** is stored in the database **115.** The processor **109** extracts the time stamped temperature data **106** corresponding to the intermittently used refrigerator **101** present in the site from the database **115.**

At block **119,** the values for each of the one or more predefined parameters are determined. In an embodiment, the values for each of the one or more predefined parameters are determined based on the extracted time stamped temperature data **106.**

At block **121,** the processor **109** checks whether the values for each of the one or more predefined parameters are determined for all the sites. If the values are determined for all the sites, the method proceeds to block **123** via "Yes". If the values are not determined for all the sites, the method proceeds to block **117** via "No".

At block **123,** the processor **109** plots a histogram. In an embodiment, the processor **109** computes distribution of the fire up time based on the values determined for the fire up time and plots the histogram for fire up time using the distribution. In an embodiment, upon computing distribution of the fire up time, the processor **109** identifies the one or more sites comprising fire up time less than 25th quartile and greater than the 75th quartile. Further, the processor **109** also computes distribution of the response time based on the values determined for the response time and plots the histogram for response time using the distribution. In an embodiment, upon computing distribution of the response time, the processor **109** identifies the one or more sites having response time less than 25th quartile and greater than the 75th quartile.

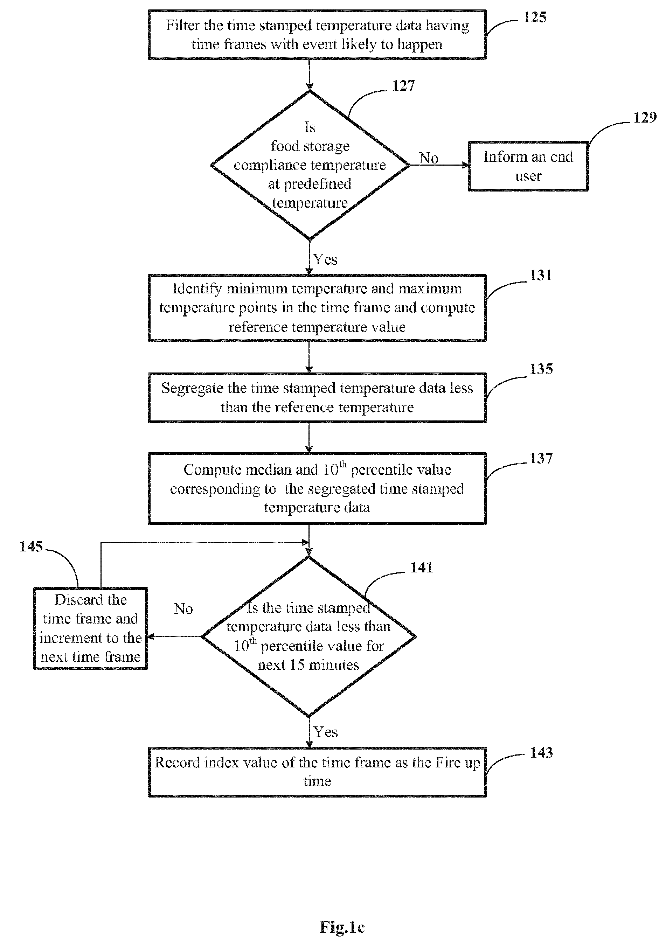

The process of determining the values for fire up time is illustrated in **Fig.1c.**

At block **125,** the processor **109,** filters the time stamped temperature data 106. In an embodiment, the processor **109** identifies time frames of the time stamped temperature data **106** comprising events that are likely to happen in the site. As an example, the events which are likely to happen may be end of service window, setting up and starting the service window etc. In an embodiment, service window is a time frame during which service is active in the site. Finally, the processor **109** filters the time frames of the time stamped temperature data **106** comprising events that are likely to happen in the site.

At block **127,** the processor **109** checks whether food storage compliance temperature is at predefined temperature. As an example, the predefined temperature may be 5°C (Celsius). If the food storage compliance temperature is at the predefined temperature, the method proceeds to block **131** via "Yes". If the food storage compliance temperature is not at the predefined temperature, the method proceeds to block **129** via "No". In another example, the predefined temperature may be 3°C (Celsius) or 4°C (Celsius) or it may be varied as per the requirement.

At block **129**, the processor **109** informs an end user about violation of food storage compliance temperature. As an example, the end user may be manager of the site, crew members of the site, technicians of the intermittently used refrigerator **101** etc. In an embodiment, when the food storage compliance temperature is not at the predefined temperature, the processor **109** immediately informs the end user to take necessary action. If the necessary action is not taken by the end user, materials stored in the intermittently used refrigerator **101** may get spoilt.

At block **131**, the processor **109** computes value for reference temperature. In an embodiment, the processor **109** identifies minimum and maximum temperature points in the time frame. Based on the identified minimum and maximum temperature, the value for reference temperature is computed using below Equation 1.

$$\text{Reference temperature} = (\text{Minimum temperature} + \text{Maximum temperature}) / 2 \;\ldots\ldots (1)$$

At block **135**, the processor **109** segregates, the time stamped temperature data **106** less than the reference temperature. In an embodiment, the processor **109** segregates the time stamped temperature data **106** based on the computed value of the reference temperature. In one embodiment, the time stamped temperature data **106** less than the computed value of the reference temperature is segregated.

At block **137**, the processor **109** computes the median and $10^{th}$ percentile value corresponding to the segregated time stamped temperature data **106**. In an embodiment, median is denoting or relating to a value or quantity lying at the midpoint of a distribution of observed values or quantities. In other words, median is $50^{th}$ percentile value and is computed using a first predefined technique stored in the memory **113.** $10^{th}$ percentile value of the segregated time stamped temperature data **106** is computed using a second predefined technique stored in the memory **113.**

At block **141**, the processor **109** checks if the time stamped temperature data **106** is less than $10^{th}$ percentile value for next 15 minutes or not. In an embodiment, the processor **109** checks if the time stamped temperature data **106** is less than $10^{th}$ percentile value for next 15 minutes to ensure that state of the intermittently used refrigerator **101** changes and also to avoid any noise samples. If the time stamped temperature data **106** is less than $10^{th}$ percentile value for next 15 minutes, then the method proceeds to block **143** via "Yes". If the time stamped temperature data **106** is not less than $10^{th}$ percentile value for next 15 minutes, the method proceeds to block **145** via "No".

At block **143**, the processor **109** records index value of time frame as the fire up time. In an embodiment, the time stamped temperature data **106** extracted by the processor **109** comprises the time frame at which the temperature data was recorded. The index value of the time frame is considered as the fire up time.

At block **145**, the processor **109** discards the time frame and increments to next time frame. In an embodiment, the processor **109** discards the time frame at which the temperature data was recorded and proceeds with the process for next time frame.

The process of determining the values for temperature settling time is illustrated in **Fig**.1**d**.

At block **147**, the processor **109,** filters the time stamped temperature data **106.** In an embodiment, the processor **109** identifies time frames of the time stamped temperature data **106** comprising events that are likely to happen in the site. As an example, the events which are likely to happen may be end of service window, setting up and starting the service window etc. Finally, the processor **109** filters the time frames of the time stamped temperature data **106** comprising events that are likely to happen in the site.

At block **149**, the processor **109** checks whether food storage compliance temperature is at predefined temperature. As an example, the predefined temperature may be 5°C (Celsius). If the food storage compliance temperature is at the predefined temperature, the method proceeds to block **153** via "Yes". If the food storage compliance temperature is not at the predefined temperature, the method proceeds to block **151** via "No".

At block **151**, the processor **109** informs the end user. In an embodiment, when the food storage compliance temperature is not at predefined temperature, the processor **109** immediately informs the end user to take necessary action. If the necessary action is not taken by the end user, materials stored in the intermittently used refrigerator **101** may get spoilt.

At block **153**, the processor **109** computes value for reference temperature. In an embodiment, the processor **109** identifies minimum and maximum temperature points in the time frame. Based on the identified minimum and maximum temperature, the value for reference temperature is computed using the Equation 1.

At block **157**, the processor **109** segregates, the time stamped temperature data **106** greater than the reference temperature. In an embodiment, the processor **109** segregates the time stamped temperature data **106** based on the computed value of the reference temperature. The time stamped temperature data **106** greater than the computed value of the reference temperature is segregated.

At block **159,** the processor **109** sets the food storage compliance temperature to the desired temperature. As an example, the food storage compliance temperature may be 4°C.

At block **161,** the processor **109** segregates the time stamped temperature data **106** based on the set food storage compliance temperature. In an embodiment, the processor **109** segregates the time stamped temperature data **106** less than the set food storage compliance temperature.

At block **163,** the processor **109** checks if the time stamped temperature data **106** is less than the set food storage compliance temperature for next 15 minutes or not. In an embodiment, the processor **109** checks if the time stamped temperature data **106** is less than the set food storage compliance temperature for next 15 minutes to ensure that state of the intermittently used refrigerator **101** changes and also to avoid any noise samples. If the time stamped temperature data **106** is less than the set food storage compliance temperature for next 15 minutes, then the method proceeds to block **165** via "Yes". If the time stamped temperature data **106** is not less than the set food storage compliance temperature for next 15 minutes, the method proceeds to block **167** via "No".

At block **165,** the processor **109** records index value of time frame as the temperature settling time. In an embodiment, the time stamped temperature data **106** extracted by the processor **109** comprises the time frame at which the temperature data was recorded. The index value of the time frame is considered as the temperature settling time.

At block **167,** the processor **109** discards the time frame and increments to next time frame. In an embodiment, the processor **109** discards the time frame at which the temperature data was recorded and proceeds with the process for next time frame.

In an embodiment, the processor **109** determines the value for the response time using below Equation 2.

$$\text{Response time} = \text{Temperature settling time} - \text{Fire up time} \dots\dots\dots\dots\dots\dots\dots\dots(2)$$

As an example, if the temperature settling time is 5 minutes and fire up time is 3 minutes, then according to the equation 2, response time is 2 minutes.

In an embodiment, the processor **109** identifies if there is degradation in compressor efficiency of the intermittently used refrigerator **101.** The compressor efficiency is determined using below equation 3.

$$\text{Compressor efficiency} = \frac{\text{(Median of the segregated time stamped temperature data} - \text{food storage compliance temperature)}}{\text{response time}} \dots\dots\dots\dots\dots\dots\dots\dots (3)$$

Upon determining the values for each of the one or more predefined parameters, the processor **109** compares the determined values of the one or more predefined parameters with one or more predetermined values associated with the performance measuring device **108.** The one or more predetermined values are stored in the database **115.** Upon comparing, the processor **109** determines if there is any deviation of the determined values of each of the one or more predefined parameters from the one or more predetermined values or not. If the processor **109** observes the deviation, the processor **109** immediately notifies the deviation to the end user of the intermittently used refrigerator **101** through the user interface **111.**

Further, the processor **109** determines temperature variation of the temperature sensor **102** configured in the intermittently used refrigerator **101** based on the time stamped temperature data **106.** The temperature variation helps in identifying additional service windows/sales in a site comprising the intermittently used refrigerator **101** i.e. determining temperature variation helps in identifying intensity of sales in the site. The temperature variation is directly proportional to opening and closing of doors of the intermittently used refrigerator **101.** The opening and closing of the doors is in turn proportional to the sales in the site during the time frame comprising sales hours of the site.

The process of determining temperature variation of an intermittently used refrigerator **101** is illustrated in the **Fig**.**1e**.

At block **169,** the time stamped temperature data **106** is extracted from the database **115.** In an embodiment, the readable format of the received time stamped temperature data **106** is stored in the database **115.** The processor **109** extracts the time stamped temperature data **106** corresponding to the intermittently used refrigerator **101** present in the site from the database **115.**

At block **171,** the processor **109** segregates, the time stamped temperature data **106** based on the service window. In an embodiment, the processor **109** segregates the time stamped temperature data **106** during the service window of the site i.e. during the time frame comprising sales hours of the site.

At block **173,** the processor **109** divides the time stamped temperature data **106.** In an embodiment, the processor **109** divides the time stamped temperature data **106** into time intervals of 30 minutes.

At block **175,** the processor **109** computes each of 10$^{th}$ percentile value, 90$^{th}$ percentile value and 50$^{th}$ percentile value of the time stamped temperature data **106** for every 30 minutes. In other words, the 50$^{th}$ percentile value is referred as median and is computed using the first predefined technique. In an embodiment, median is denoting or relating to a value or quantity lying at the midpoint of a distribution of observed values or quantities. The 10$^{th}$ percentile value of the segregated time stamped temperature data **106** is computed using the second predefined technique. The 90$^{th}$ percentile value of the segregated time stamped temperature data **106** is computed using a third predefined technique stored in the memory **113.**

At block **177,** the processor **109** estimates the variation in temperature in 30 minutes. In an embodiment, the temperature variation is estimated using below Equation 4.

$$\text{Temperature variation} = 90^{th} \text{ percentile value} - 10^{th} \text{ percentile value} / 50^{th} \text{ percentile}$$
$$\text{value} \dots\dots\dots\dots\dots\dots\dots\dots\dots\dots\dots\dots\dots\dots\dots\dots\dots\dots\dots\dots\dots\dots\dots(4)$$

At block **179,** the processor **109** infers about the time interval with additional service windows and time interval with low service windows. In an embodiment, the processor **109** concludes that, the time interval comprising high temperature variation is the time interval with additional service windows. The time interval comprising low temperature variation is the time interval when the additional service windows are low. Identification of the time interval when the additional service windows are low helps in reducing energy consumption during the time interval. In an embodiment, the analysis of the temperature variation is in terms of, but not limited to, guest count per hour, foot falls per hour and additional service windows per hour.

Further, performance of the intermittently used refrigerator **101** is determined by the processor **109.** The performance is determined by analyzing the temperature variation and the determined values of each of the one or more predefined parameters. Upon determining the performance of the intermittently used refrigerator **101,** the processor **109** provides one or more suggestions to the end user through the user interface **111.** The one or more suggestions are related to the performance and the energy consumption of the intermittently used refrigerator **101.** The one or more suggestions aim towards reducing energy consumption, safe guarding the mechanism of the intermittently used refrigerator **101** and cost savings. As an example, the one or more suggestions may include, but not limited to, detecting early signs of performance degradation and recommendation for preventing catastrophic failures that can disrupt business because of downtime of the intermittently used refrigerator **101,** recommendation on enhancement of the refrigeration effect of the intermittently used refrigerator **101,** suggestion on adjusting set points of the intermittently used refrigerator **101** to reduce energy consumption when the additional service windows are low, recommendation on reducing lighting levels at the site to reduce lighting energy when the additional service windows are low, recommendation on effective manpower utilization when the additional service windows are low and recommendation on food stocking/ ordering to meet demand during the time interval of the additional service windows.

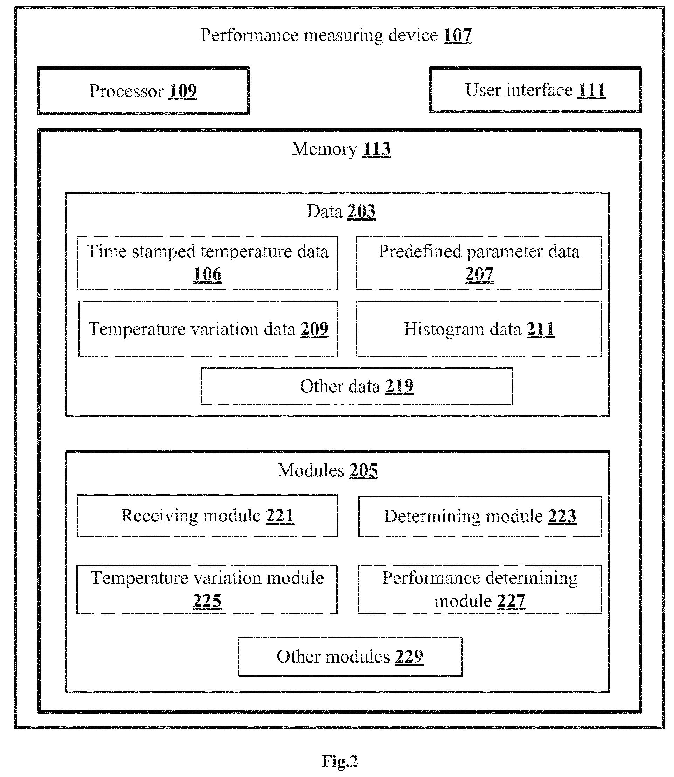

**Fig.2** shows a detailed block diagram of a performance measuring device for determining performance of an intermittently used refrigerator in accordance with some embodiments of the present disclosure.

In one implementation, the performance measuring device **108** receives data **203** from a temperature sensor **102** configured in the intermittently used refrigerator **101.** As an example, the data **203** may be stored in a memory **113** configured in the performance measuring device **108.** In one embodiment, data **203** comprises time stamped temperature data **106,** predefined parameter data **207,** temperature variation data **209,** histogram data **211** and other data **219.** In the illustrated **Fig.2,** modules **205** stored in the memory **113** are described herein in detail.

In one embodiment, the data **203** may be stored in the memory **113** in the form of various data structures. Additionally, the aforementioned data **203** can be organized using data models, such as relational or hierarchical data models. The other data **219** may store data, including temporary data and temporary files, generated by modules **205** for performing the various functions of the performance measuring device **108.**

In an embodiment, the time stamped temperature data **106** is provided by temperature sensor **102** configured in the intermittently used refrigerator **101.** The temperature sensor **102** detects or records temperature of the intermittently used refrigerator **101** at predefined time intervals, known as the time stamped temperature data **106,** from each of one or more sites.

In an embodiment, the predefined parameter data **207** comprises one or more predefined parameters which are determined by the performance measuring device **108.** The one or more predefined parameters may be fire up time, response time, settling temperature, food storage compliance temperature and temperature settling time. Fire up time is time taken by the intermittently used refrigerator **101** to start the process of cooling. Initially when the intermittently used refrigerator **101** is fired up, internal temperature of the intermittently used refrigerator **101** is same as external temperature. Gradually, the internal temperature of the intermittently used refrigerator **101** reduces and the internal temperature reaches the desired temperature. Therefore, the time taken by the intermittently used refrigerator **101** to reach the desired temperature to start the process of cooling is known as the fire up time. Response time is the time taken by intermittently used refrigerator **101** to cool down temperature of the materials stored inside from their initial temperature to the desired temperature. As an example, the materials stored inside the intermittently used refrigerator **101** may be meat, vegetables, fruits, dishes, beverages etc. The desired temperature at which the materials inside the intermittently used refrigerator **101** may be stored is known as the food storage compliance temperature. Temperature settling time is the time taken by the intermittently used refrigerator **101** to settle at the settling temperature.

In an embodiment, temperature variation data **209** comprises temperature variation of an intermittently used refrigerator **101** which is determined by the performance measuring device **108**. Processor **109** configured in the performance measuring device **108** estimates the variation in temperature in every 30 minutes time interval. Therefore, temperature variation data **209** comprises the temperature variation estimated in a particular time frame.

In an embodiment, histogram data **211** comprises computed distribution of the fire up time based on the values determined for the fire up time and computed distribution of the response time based on the values determined for the response time. The histogram data **211** also comprises the plotted histograms of the fire up time and the response time based on the computed distributions.

In an embodiment, the data stored in the memory **113** is processed by the modules **205** of the performance measuring device **108**. The modules **205** may be stored within the memory **113** as shown in the **Fig.2**. In an example, the modules **205,** communicatively coupled to the processor **109,** may also be outside the memory **113**.

In an embodiment, the modules **205** may include, for example, a receiving module **221,** a determining module **223,** a temperature variation module **225,** a performance determining module **227** and other modules **229**. The other modules **229** may be used to perform various miscellaneous functionalities of the performance measuring device **108**. It will be appreciated that such aforementioned modules **205** may be represented as a single module or a combination of different modules.

In an embodiment, the receiving module **221** receives the time stamped temperature data **106** from the temperature sensor **102** through the communication network **107**. The processor **109** translates the received time stamped temperature data **106** to a readable format and stores the readable format of received time stamped temperature data **106** in the database **115**.

In an embodiment, the determining module **223** determines values for each of the one or more predefined parameters associated with the intermittently used refrigerator **101**. The values for each of the one or more predefined parameters are determined based on the extracted time stamped temperature data **106**. The values for each of the one or more predefined parameters are determined using one or more predefined techniques stored in the memory **113**. Upon determining the values for each of the one or more predefined parameters, the determining module **223** determines if there is any deviation of the determined values of each of the one or more predefined parameters from one or more predetermined values. The one or more predetermined values are associated with the performance measuring device **108** and are stored in the database **115**. The deviation is determined by comparing the determined values of the one or more predefined parameters with the one or more predetermined values.

In an embodiment, the temperature variation module **225** determines temperature variation of the temperature sensor **102** based on the time stamped temperature data **106**. The temperature variation helps in identifying additional service windows in a site comprising the intermittently used refrigerator **101**. High temperature variation indicates high business intensity leading to additional service windows. So when the temperature variation is less, it means that the business intensity is low leading to less number of additional service windows.

In an embodiment, the performance determining module **227** determines performance of the intermittently used refrigerator **101**. The performance is determined by analyzing the temperature variation and the determined values of each of the one or more predefined parameters. Upon determining the performance of the intermittently used refrigerator **101,** the performance determining module **227** provides one or more suggestions to the end user through the user interface **111**. The one or more suggestions are related to the performance and the energy consumption of the intermittently used refrigerator **101**. The one or more suggestions aim towards reducing energy consumption, safe guarding the mechanism of the intermittently used refrigerator **101** and cost savings.

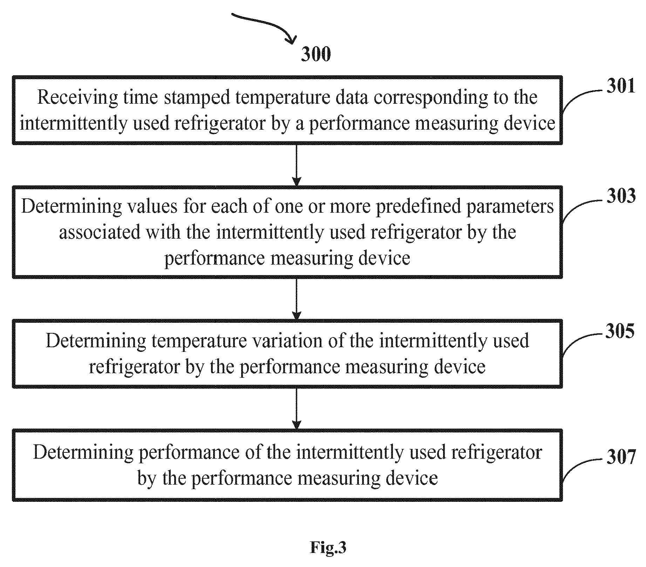

**Fig.3** illustrates a flowchart for determining performance of an intermittently used refrigerator in accordance with some embodiments of the present disclosure.

As illustrated in **Fig.3,** the method **300** comprises one or more blocks illustrating a method for determining performance of an intermittently used refrigerator **101**. The method **300** may be described in the general context of computer executable instructions. Generally, computer executable instructions can include routines, programs, objects, components, data structures, procedures, modules, and functions, which perform particular functions or implement particular abstract data types.

The order in which the method **300** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block **301,** the performance measuring device **108** receives time stamped temperature data **106.** In an embodiment, the time stamped temperature data **106** detected or recorded by the temperature sensor **102** is received through the communication network **107.** The processor **109** translates the received time stamped temperature data **106** to a readable format and stores the readable format of received time stamped temperature data **106** in the database **115.**

At block **303,** the performance measuring device **108** determines values for each of the one or more predefined parameters associated with the intermittently used refrigerator **101.** The one or more predefined parameters may be fire up time, response time, settling temperature, food storage compliance temperature and temperature settling time. In an embodiment, the values for each of the one or more predefined parameters are determined based on the extracted time stamped temperature data **106.** The values for each of the one or more predefined parameters are determined using one or more predefined techniques stored in the memory **113.** Upon determining the values for each of the one or more predefined parameters, the determining module **223** determines if there is any deviation of the determined values of each of the one or more predefined parameters from one or more predetermined values. The one or more predetermined values are associated with the performance measuring device **108** and are stored in the database **115.** The deviation is determined by comparing the determined values of the one or more predefined parameters with the one or more predetermined values.

At block **305,** the performance measuring device **108** determines temperature variation of the temperature sensor **102** based on the time stamped temperature data **106.** In an embodiment, the temperature variation helps in identifying additional service windows in a site comprising the intermittently used refrigerator **101.** The temperature variation is estimated using Equation 4. Time interval comprising high temperature variation is determined to be the time interval with additional service windows. The time interval comprising low temperature variation is the time interval when the additional service windows are low. Identification of the time interval when the additional service windows are low helps in reducing energy consumption during the time interval.

At block **307,** the performance measuring device **108** determines performance of the intermittently used refrigerator **101.** In an embodiment, the performance is determined by analyzing the temperature variation and the determined values of each of the one or more predefined parameters. Upon determining the performance of the intermittently used refrigerator **101,** the performance measuring device **108** provides one or more suggestions to an end user. The one or more suggestions are related to the performance and the energy consumption of the intermittently used refrigerator **101.** The one or more suggestions aim towards reducing energy consumption, safe guarding the mechanism of the intermittently used refrigerator **101** and cost savings.

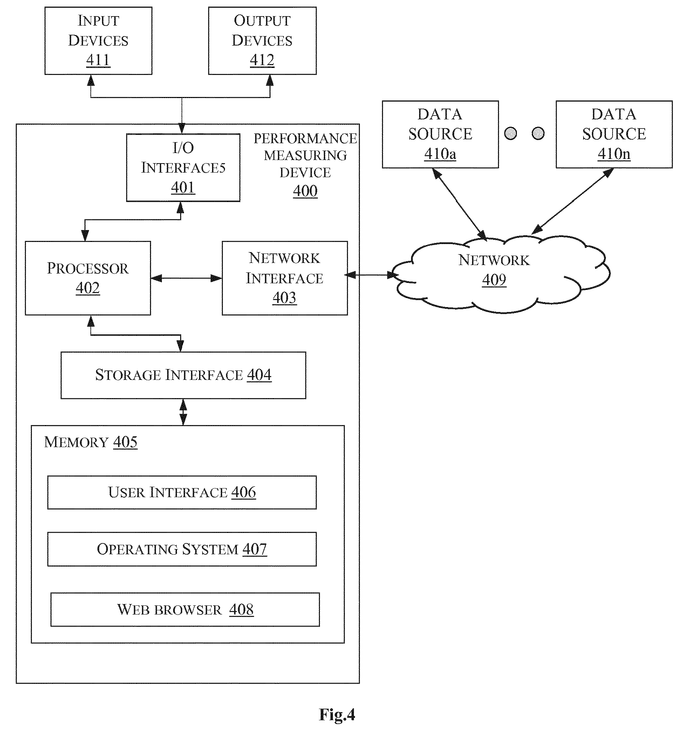

**Fig.4** is a block diagram of an exemplary computer system for implementing embodiments consistent with the present disclosure.

In an embodiment, the performance measuring device **400** is used for determining performance of an intermittently used refrigerator **101.** The performance measuring device **400** may comprise a central processing unit ("CPU" or "processor") **402.** The processor **402** may comprise at least one data processor for executing program components for executing user- or system-generated business processes. A user may include a person, a person using a device such as such as those included in this invention, or such a device itself. The processor **402** may include specialized processing units such as integrated system (bus) controllers, memory management control units, floating point units, graphics processing units, digital signal processing units, etc.

The processor **402** may be disposed in communication with one or more input/output (I/O) devices (**411** and **412**) via I/O interface **401.** The I/O interface **401** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE), WiMax, or the like), etc.

Using the I/O interface **401,** the performance measuring device **400** may communicate with one or more I/O devices (**411** and **412**).

In some embodiments, the processor **402** may be disposed in communication with a communication network **409** via a network interface **403.** The network interface **403** may communicate with the communication network **409.** The network interface **403** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface **403** and the communication network **409,** the performance measuring device **400** may communicate with one or more user devices **410** (**a**,..,**n**). The communication network **409** can be implemented as one of the different types of networks, such as intranet or Local Area Network (LAN) and such within the organization. The communication network **409** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **409** may include a variety of network devices, including routers, bridges, servers, computing devices, storage devices, etc. The one or more user devices **410 (a,...,n)** may include, without limitation, personal computer(s), mobile devices such as cellular telephones, smartphones, tablet computers, eBook readers, laptop computers, notebooks, gaming consoles, or the like.

In some embodiments, the processor **402** may be disposed in communication with a memory **405** (e.g., RAM, ROM, etc. not shown in **Fig.4**) via a storage interface **404**. The storage interface **404** may connect to memory **405** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **405** may store a collection of program or database components, including, without limitation, user interface application **406,** an operating system **407,** web server **408** etc. In some embodiments, performance measuring device **400** may store user/application data **406,** such as the data, variables, records, etc. as described in this invention. Such databases may be implemented as fault-tolerant, relational, scalable, secure databases such as Oracle or Sybase.

The operating system **407** may facilitate resource management and operation of the performance measuring device **400.** Examples of operating systems include, without limitation, Apple Macintosh OS X, UNIX, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), International Business Machines (IBM) OS/2, Microsoft Windows (XP, Vista/7/8, etc.), Apple iOS, Google Android, Blackberry Operating System (OS), or the like. User interface **406** may facilitate display, execution, interaction, manipulation, or operation of program components through textual or graphical facilities. For example, user interfaces may provide computer interaction interface elements on a display system operatively connected to the performance measuring device **400,** such as cursors, icons, check boxes, menus, scrollers, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the performance measuring device **400** may implement a web browser **408** stored program component. The web browser may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the performance measuring device **400** may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the performance measuring device **400** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

Advantages of the embodiments are described below:

In an embodiment, the present disclosure provides a method and a device for determining performance of an intermittently used refrigerator.

The present disclosure determines performance of the intermittently used refrigerator by using a factor i.e. time stamped temperature data recorded by the temperature sensor associated with the intermittently used refrigerator.

The present disclosure determines values for each of the one or more predefined parameters such as fire up time, response time, food storage compliance temperature, temperature settling time and settling temperature, using statistical derivations.

The present disclosure notifies an end user immediately when there is a deviation observed in the determined values compared to one or more predetermined values.

The present disclosure provides a feature wherein temperature variation helps in understanding the business intensity of a site comprising the intermittently used refrigerators. Temperature variation is directly proportional to number of times door of the intermittently used refrigerator is opened and closed. Therefore high temperature variation indicates high business intensity leading to additional service windows. So when the temperature variation is less, it means that the business intensity is low leading to less number of additional service windows.

The present disclosure provides a feature wherein one or more suggestions are given to the end user based on the additional service windows, energy consumption and cost savings.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The specification has described a method and a device for determining performance of an intermittently used refrigerator. The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

**Claims**

1. A computer-implemented method for determining performance of an intermittently used refrigerator, the method comprising:

   receiving time stamped temperature data corresponding to the intermittently used refrigerator;
   determining values for each of one or more predefined parameters associated with the intermittently used refrigerator based on the time stamped temperature data, wherein the one or more predefined parameters are fire up time, response time, settling temperature, food storage compliance temperature and temperature settling time;
   determining temperature variation of the intermittently used refrigerator based on the time stamped temperature data; and
   determining the performance of the intermittently used refrigerator by analysing the temperature variation and the determined values of each of the one or more predefined parameters.

2. The method as claimed in claim 1 further comprises:

   determining deviation of the determined values of each of the one or more predefined parameters from one or more predetermined values, wherein the one or more predetermined values are stored in a database associated with the performance measuring device; and
notifying the deviation to an end user of the intermittently used refrigerator.

3. The method as claimed in claim 1 or claim 2, wherein the temperature variation of the intermittently used refrigerator is determined to identify additional service windows in a site comprising the intermittently used refrigerator.

4. The method as claimed in claim 3 further comprises identifying time interval when the additional service windows are low in the site to reduce energy consumption of the intermittently used refrigerator during the identified time interval.

5. The method as claimed in any preceding claim further comprises providing one or more suggestions related to the performance and the energy consumption of the intermittently used refrigerator to the end user.

6. The method as claimed in any preceding claim, wherein the time stamped temperature data is received from temperature sensor associated with the intermittently used refrigerator.

7. The method as claimed in any preceding claim, wherein the values for each of the one or more predefined parameters are determined using one or more predefined techniques.

8. A performance measuring device for determining performance of an intermittently used refrigerator, the performance measuring device comprising:

   a processor; and
   a memory communicatively coupled to the processor, wherein the memory stores the processor-executable instructions, which, on execution, causes the processor to:

      receive time stamped temperature data corresponding to the intermittently used refrigerator;
      determine values for each of one or more predefined parameters associated with the intermittently used refrigerator based on the time stamped temperature data, wherein the one or more predefined parameters are fire up time response time, settling temperature, food storage compliance temperature and temperature settling time;
      determine temperature variation of the intermittently used refrigerator based on the time stamped temperature data; and
      determine the performance of the intermittently used refrigerator by analyzing the temperature variation and the determined values of each of the one or more predefined parameters.

9. The performance measuring device as claimed in claim 8, wherein the instructions further cause the processor to:

   determine deviation of the determined values of each of the one or more predefined parameters from one or more predetermined values, wherein the one or more predetermined values are stored in a database associated with the performance measuring device; and
   notify the deviation to an end user of the intermittently used refrigerator.

10. The performance measuring device as claimed in claim 8 or claim 9, wherein the temperature variation of the intermittently used refrigerator is determined to identify additional service windows in a site comprising the intermittently used refrigerator.

11. The performance measuring device as claimed in claim 10, wherein the instructions further cause the processor to identify time interval when the additional service windows are low in the site to reduce energy consumption of the intermittently used refrigerator during the identified time interval.

12. The performance measuring device as claimed in any one of claims 8 to 11, wherein the instructions further cause the processor to provide one or more suggestions related to the performance and the energy consumption of the intermittently used refrigerator to the end user.

13. The performance measuring device as claimed in any one of claims 8 to 12, wherein the instructions further cause the processor to receive the time stamped temperature data from temperature sensor associated with the intermittently used refrigerator.

**14.** The performance measuring device as claimed in any one of claims 8 to 13, wherein the instructions further cause the processor to determine the values for each of the one or more predefined parameters using one or more predefined techniques.

**15.** A non-transitory computer readable medium including instructions stored thereon that when processed by at least one processor causes a performance measuring device to perform the method as claimed in any one of claims 1 to 7.

Fig.1a

EP 3 206 172 A1

```
                    ┌──────────┐
                    │ Database │
                    │   115    │
                    └────┬─────┘
                         │
                         ▼
┌─────────────────────────────────────────────────────┐
│ Extract time stamped temperature data corresponding  │──── 117
│   to an intermittently used refrigerator from a site │
└─────────────────────────┬───────────────────────────┘
                          │
                          ▼
┌─┬───────────────────────────────────────────────┬───┐
│ │   Determine values for each of one or         │   │──── 119
│ │          more predefined                      │   │
│ │          parameters                           │   │
└─┴───────────────────────────────────────────────┴───┘
                          │
                          ▼
                      ╱───────╲
                    ╱  values   ╲ ──── 121
         No       ╱  determined   ╲
    ◄───────────╱  for each of the  ╲
               ╲   one or more      ╱
                ╲    sites         ╱
                  ╲──────────────╱
                        │ Yes
                        ▼
┌─────────────────────────────────────────────────────┐
│ Compute distribution of the fire up time and the     │──── 123
│                  response time                        │
└─────────────────────────────────────────────────────┘
```

Fig.1b

Filter the time stamped temperature data having time frames with event likely to happen — 125

Is food storage compliance temperature at predefined temperature — 127

No → Inform an end user — 129

Yes ↓

Identify minimum temperature and maximum temperature points in the time frame and compute reference temperature value — 131

Segregate the time stamped temperature data less than the reference temperature — 135

Compute median and $10^{th}$ percentile value corresponding to the segregated time stamped temperature data — 137

145 — Discard the time frame and increment to the next time frame

No ← Is the time stamped temperature data less than $10^{th}$ percentile value for next 15 minutes — 141

Yes ↓

Record index value of the time frame as the Fire up time — 143

**Fig.1c**

Filter the time stamped temperature data having time frames with event likely to happen — 147

Is food storage compliance temperature at predefined temperature — 149

No → Inform an end user — 151

Yes

Identify minimum temperature and maximum temperature points in the time frame and compute reference temperature value — 153

Segregate the time stamped temperature data greater than the reference temperature — 157

Set the food storage compliance temperature — 159

Filter the time stamped temperature data less than the set food storage compliance temperature — 161

Is the time stamped temperature data less than the set food storage compliance temperature for next 15 minutes — 163

No → Discard the time frame and increment to the next time frame — 167

Yes

Record index value of the time frame as the settling time — 165

**Fig.1d**

Extract time stamp temperature data corresponding to an intermittently used refrigerator from a site — 169

Segregate the time stamped temperature data during the service window — 171

Divide the time stamped temperature data into time intervals of 30minutes — 173

Compute the $10^{th}$ percentile, $90^{th}$ percentile and the median of the time stamped temperature data at every 30 minutes time interval — 175

Estimate the temperature variation in 30 minutes — 177

Time interval with high variation indicates additional service windows and time interval with low variation indicates that the additional service windows are low — 179

Fig.1e

Performance measuring device **107**

| Processor **109** | User interface **111** |

Memory **113**

Data **203**

| Time stamped temperature data **106** | Predefined parameter data **207** |
| Temperature variation data **209** | Histogram data **211** |

Other data **219**

Modules **205**

| Receiving module **221** | Determining module **223** |
| Temperature variation module **225** | Performance determining module **227** |

Other modules **229**

**Fig.2**

**300**

| Receiving time stamped temperature data corresponding to the intermittently used refrigerator by a performance measuring device | 301 |

↓

| Determining values for each of one or more predefined parameters associated with the intermittently used refrigerator by the performance measuring device | 303 |

↓

| Determining temperature variation of the intermittently used refrigerator by the performance measuring device | 305 |

↓

| Determining performance of the intermittently used refrigerator by the performance measuring device | 307 |

Fig.3

Fig.4

Europäisches
Patentamt

European
Patent Office

Office européen
des brevets

# EUROPEAN SEARCH REPORT

**Application Number**

EP 16 16 2537

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/029575 A1 (OKAMOTO TAKEHISA [JP]) 14 March 2002 (2002-03-14) * paragraph [0037] - paragraph [0043] * * paragraph [0045] - paragraph [0055] * * figures 1, 3, 8 * | 1-15 | INV. G06Q10/06 G06Q50/06 H04L12/28 |
| A | US 2014/229027 A1 (DHILLON HAR AMRIT PAL SINGH [IN] ET AL) 14 August 2014 (2014-08-14) * paragraph [0003] - paragraph [0008] * * paragraph [0059] - paragraph [0064] * | 1-15 | |

TECHNICAL FIELDS
SEARCHED      (IPC)

G06Q
H04L

The present search report has been drawn up for all claims

| Place of search | Date of completion of the search | Examiner |
|---|---|---|
| Munich | 13 May 2016 | Hasubek, Bodo |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 16 2537

13-05-2016

| Patent document cited in search report | Publication date | Patent family member(s) | | Publication date |
|---|---|---|---|---|
| US 2002029575 A1 | 14-03-2002 | CN | 1343862 A | 10-04-2002 |
| | | KR | 20020020831 A | 16-03-2002 |
| | | TW | 593950 B | 21-06-2004 |
| | | US | 2002029575 A1 | 14-03-2002 |
| US 2014229027 A1 | 14-08-2014 | NONE | | |

For more details about this annex : see Official Journal of the European Patent Office, No. 12/82